# NEUE EUROPÄISCHE PATENTSCHRIFT

(11) **EP 1 275 533 B2**
(45) Veröffentlichungstag und Bekanntmachung des Hinweises auf die Entscheidung über den Einspruch: **28.08.2013**
(45) Hinweis auf die Patenterteilung: 09.08.2006
(21) Anmeldenummer: 02009190.6
(22) Anmeldetag: 25.04.2002
(51) Int. Cl.: B60D 1/54, B60D 1/06

(54) **Anhängerkupplung**
Trailer coupling
Attelage de remorque

(30) Priorität: 14.07.2001 DE 10134318
(43) Veröffentlichungstag der Anmeldung: 15.01.2003
(73) Patentinhaber: WESTFALIA - Automotive GmbH, 33378 Rheda-Wiedenbrück (DE)
(72) Erfinder: Abels, Frank O., 29633 Münster (DE)
(74) Vertreter: Bregenzer, Michael

(56) Entgegenhaltungen:
- WO-A-91/15374
- WO-A-98/57813
- DE-A- 2 619 913
- DE-A- 3 328 524
- DE-A- 19 848 487

## Beschreibung

Die Erfindung betrifft eine Anhängerkupplung für Kraftfahrzeuge, insbesondere Personenkraftwagen, mit einem Kupplungsarm, der an seinem freien Ende ein Kopfstück zum lösbaren Befestigen eines Anhängers trägt und zwischen einer im am Fahrzeug montierten Zustand nach hinten gerichteten Arbeitsstellung und einer weiter vorne unter dem Fahrzeug angeordneten Ruhestellung unter Ausführung einer Tauchbewegung verstellbar ist, und mit einer Feststellvorrichtung zum Feststellen des Kupplungsarms in Ruhestellung.

Eine solche Anhängerkupplung ist beispielsweise in der DE OS 26 19 913 gezeigt. Der Vorteil einer solchen Anhängerkupplung besteht darin, dass sie in der Ruhestellung in einem Bereich unterhalb des Fahrzeugs sozusagen verschwindet und somit zum einen ästhetisch ansprechend verstaut ist und zum andern die Funktion eines Stoßfängers des Fahrzeugs nicht beeinträchtigt. In der Ruhestellung kann die bekannte Anhängerkupplung durch eine Feststellvorrichtung gesichert sein, gemäß der DE OS 26 19 913 beispielsweise durch eine Feder.

Nachteilig ist aber, dass die bekannte Anhängerkupplung für einen Benutzer nur umständlich und unbequem manuell handhabbar ist. Der Kupplungsarm ist in der Ruhestellung von hinten meist nicht sichtbar, so dass er nur durch Ertasten, wobei die Hände des Benutzers verschmutzen, oder durch einen Blick unter das Fahrzeug, wozu der Benutzer sich unter das Fahrzeug beugen muss, geortet werden kann. Der Benutzer muss weit unter das Fahrzeug greifen, wozu er meist unter das Fahrzeug kriechen muss, um den Kupplungsarm zu ergreifen und aus der Ruhestellung in die Arbeitsstellung zu bringen.

Ein Anhängekupplungs system MK1 der Firma ORIS weist einen Kupplungsarm auf. Der Kupplungsarm ist mit einem Schwenklager zwischen einer Ruhestellung und einer Arbeitsstellung schwenkbar. Das Schwenklager ist in einem Faltenbalg als Schutzhülle angeordnet.

Der Faltenbalg winkt federnd in eine untere Zwischenstellung des kupplungsarms.

Aus der DE 33 28 524 A1 ist ferner eine Anhängerkupplung der eingangs genannten Art bekannt. Ein Ausleger mit einem Kugelkopf, die zusammen einen Kugelhals bilden, ist an einem Querträger eines Fahrzeugs um eine vertikale Drehachse, d.h. horizontal, schwenkbar. Der Kugelhals ist mit Hilfe einer Schraubenfeder, die tangential an einem Feststellring angreift, spielfrei in einem Führungsgehäuse verspannt, so dass eine Zwangsverriegelung gegeben ist. Zur Entriegelung des Kugelhalses wird ein Handgriff eines Ausrückhebels, der an dem Fahrzeugquerträger schwenkbar gelagert ist, betätigt.

Es ist daher die Aufgabe der vorliegenden Erfindung, bei einer Anhängerkupplung der eingangs genannten Art die manuelle Handhabbarkeit zu verbessern.

Zur Lösung das Aufgabe ist eine Anhängekupplung gemäß der technischer Lehre des Anspruches 1 vorgesehen.

Der Kupplungsarm ist in der Ruhestellung durch eine Kraft beaufschlagt, so dass er nach dem Lösen der Feststellvorrichtung selbsttätig aus der Ruhestellung zur Arbeitsstellung hin in eine untere Zwischenstellung schwenkt, so dass er von einem Benutzer bequem ergreifbar und in die Arbeitsstellung bringbar ist, und dass als die den Kupplungsarm in Ruhestellung beaufschlagende Kraft dessen Gewichtskraft und/oder eine von einer Bereitstellungs-Federanordnung bereitgestellte Bereitstellungskraft vorgesehen ist.

Die untere Zwischenstellung ist sozusagen eine Bereitstellungsposition, bei der der Kupplungsarm beispielsweise unterhalb eines Stoßfängers des Fahrzeugs nach unten hängt und leicht vom Benutzer ergriffen werden kann. Dieser muss sich lediglich etwas nach unten beugen, um den Kupplungsarm zu ergreifen.

Die erfindungsgemäße Konstruktion ist robust und weitgehend unempfindlich gegen Verschmutzungen, so dass ein offener Aufbau unterhalb des Fahrzeugs ohne Weiteres möglich ist.

Als Tragkonstruktion für die erfindungsgemäße Anhängerkupplung kann ein üblicher Querträger dienen, wie er auch für starre, nicht in Ruhestellung bringbare Anhängerkupplungen Verwendung findet. Eine Anpassung an verschiedene Autotypen und damit variierende Platzverhältnisse ist ohne weiteres möglich.

Als die den Kupplungsarm in Ruhestellung beaufschlagende Kraft kann dessen Gewichtskraft dienen. Es ist auch möglich, dass die Kraft ganz oder teilweise von einer Bereitstellungs-Federanordnung bereitgestellt wird, beispielsweise von einer Feder, die sich bei Ruhestellung des Kupplungsarms zum einen am Fahrzeug und zum andern am Kupplungsarm abstützt und die vorgespannt wird, indem der Kupplungsarm in Ruhestellung gebracht wird.

Der Kupplungsarm wird durch eine Haltevorrichtung in der Arbeitsstellung gehalten. Eine Rückstellvorrichtung, insbesondere eine Rückstellfederanordnung, stellt den Kupplungsarm nach Lösen der Haltevorrichtung aus der Arbeitsstellung in die Ruhestellung zurück. Sie wird durch den Kupplungsarm auf dem Weg von der Ruhestellung in die Arbeitsstellung vorgespannt. Auch zum Rückführen des Kupplungsarms in die Ruhestellung muss somit ein Benutzer der Anhängerkupplung nicht unter das Fahrzeug greifen.

Der Kupplungsarm steht mit der Rückstellvorrichtung nur auf dem Wegabschnitt in Krafteingriff, der sich zwischen der Arbeitsstellung und etwa dem Bereich der Zwischenstellung erstreckt.

In jedem Fall ist die Rückstellvorrichtung zweckmäßigerweise derart dimensioniert, dass die durch Bewegen des Kupplungsarms in die Arbeitsstellung in die Rückstellvorrichtung eingebrachte Energie für das Zurückbewegen des Kupplungsarms in die Ruhestellung nach Lösen der Haltevorrichtung ausreicht.

Zwar können die Haltevorrichtung und die Feststellvorrichtung jeweils separate Vorrichtungen sein. Vorteilhaft ist jedoch vorgesehen, dass die Haltevorrichtung und die Feststellvorrichtung von einer Verriegelungsvorrichtung gebildet werden, so dass eine einzige Vorrichtung die Funktionen der den Kupplungsarm in der Arbeitsstellung haltenden Haltevorrichtung und der diesen in der Ruhestellung feststellenden Feststellvorrichtung erfüllt.

Die Verriegelungsvorrichtung enthält vorzugsweise eine mit dem Kupplungsarm schwenkfest verbundene Riegelscheibe, an der eine der Ruhestellung zugeordnete Ruhestellungs-Ausnehmung und eine Arbeitsstellung zugeordnete Arbeitsstellungs-Ausnehmung mit Winkelabstand zueinander angeordnet sind. Den Ausnehmungen ist ein fahrzeugfest anzuordnender, in jeder Stellung selbsttätig in die betreffende Ausnehmung einrastender Riegel zugeordnet.

An der Riegelscheibe ist zwischen der Arbeitsstellungs-Ausnehmung und der Ruhestellungs-Ausnehmung zweckmäßigerweise eine Gleitbahn vorgesehen, auf der der Riegel beim Drehen der Riegelscheibe zwischen Arbeitsstellung und Ruhestellung federbelastet anliegt. Wenn die Riegelscheibe in die Ruhestellung oder in die Arbeitsstellung gelangt, rastet der Riegel dann selbsttätig in die betreffende Ausnehmung ein.

Vorteilhaft ist die Eintrittslänge des Riegels in die Arbeitsstellungs-Ausnehmung kleiner als die Eintrittslänge des Riegels in die Ruhestellungs-Ausnehmung. Der Riegel wird nach dem Lösen aus der Arbeitsstellungs-Ausnehmung beim Drehen der Riegelscheibe von der Gleitbahn betätigt und um denjenigen Anteil des zum Lösen des Riegels aus der Ruhestellungs-Ausnehmung erforderlichen Betätigungshubs angehoben, um den dieser Betätigungshub größer ist als der Betätigungshub zum Lösen des Riegels aus der Arbeitsstellungs-Ausnehmung.

Die Feststellvorrichtung und/oder die Haltevorrichtung oder zweckmäßigerweise die beide Vorrichtungen bildende Verriegelungsvorrichtung ist vorteilhaft durch eine vom Innenraum des Fahrzeugs aus und/oder im Bereich der hinteren Fahrzeugkontur bedienbare Betätigungseinrichtung lösbar. Die Betätigungseinrichtung kann beispielsweise ein Relais oder einen sonstigen elektromagnetischen Aktor enthalten, das bzw. der durch einen im Innenraum des Fahrzeugs angeordneten elektrischen Schalter bedienbar ist.

Die Betätigungseinrichtung weist in einer bevorzugten Ausführungsform einen im montierten Zustand der Anhängerkupplung im Bereich der hinteren Fahrzeugkontur, insbesondere unterhalb eines Fahrzeug-Stoßfängers, oder im Gepäckraum des Fahrzeuges angeordneten Bedienhebel auf.

Vorzugsweise ist die Betätigungseinrichtung dem Riegel zugeordnet.

Dabei ist der Riegel zweckmäßigerweise von der Betätigungseinrichtung abhebbar, so dass er insbesondere bei Betätigung durch die an der Riegelscheibe angeordnete Gleitbahn von der Betätigungseinrichtung abheben kann.

Die Betätigungseinrichtung enthält vorzugsweise ein auf den Riegel wirkendes Umlenkgetriebe, insbesondere ein Rollengetriebe, um die auf die Betätigungseinrichtung ausgeübten Betätigungskräfte auf den Riegel zu übertragen und umzulenken. Die Betätigungseinrichtung kann somit ergonomisch günstig angeordnet und ausgestaltet werden.

Der Betätigungseinrichtung ist vorteilhaft eine elastische Bremsvorrichtung zugeordnet, die durch die Betätigungseinrichtung beim Lösen der Feststellvorrichtung vorgespannt wird, so dass das Betätigen der Betätigungseinrichtung beim Lösen der Verriegelungsvorrichtung oder der Feststellvorrichtung gegen eine von der Bremsvorrichtung ausgeübte Gegenkraft erfolgt.

Im Folgenden werden die Erfindung und ihre Vorteile anhand eines Ausführungsbeispiels erläutert. Es zeigen:
- Figur 1A: eine an einem Querholm eines Fahrzeugs montierte erfindungsgemäße Anhängerkupplung mit einem in Ruhestellung befindlichen Kupplungsarm in einer Ansicht von schräg hinten unten (bezogen auf das Fahrzeug),
- Figur 1B: die Anhängerkupplung gemäß Figur 1A, wobei jedoch der Kupplungsarm eine untere Zwischenstellung einnimmt,
- Figur 1C: die Anhängerkupplung gemäß Figuren 1A, 1B, wobei der Kupplungsarm eine Arbeitsstellung einnimmt,
- Figur 2A: die Anhängerkupplung gemäß Figur 1A etwa in Seitenansicht gemäß Pfeil IIA, wobei lediglich der Kupplungsarm und Teile einer Verriegelungs- vorrichtung sowie Teile einer Rückstellvorrichtung gezeigt sind,
- Figur 2B, 2C: die Ansicht gemäß Figur 2A, wobei sich jedoch der Kupplungsarm in der unteren Zwischenstellung bzw. in der Arbeitsstellung befindet (siehe Figuren 1B bzw. 1C),
- Figuren 3A-3C: eine Betätigungseinrichtung der Anhängerkupplung gemäß den Figuren 1 und 2 in seitlicher Ansicht, wobei ein Betätigungsablauf der Betätigungseinrichtung dargestellt ist, und die
- Figuren 4A-4C: die Betätigungseinrichtung gemäß den Figuren 3A bis 3C in einer teilweise schematisierten Ansicht von oben.

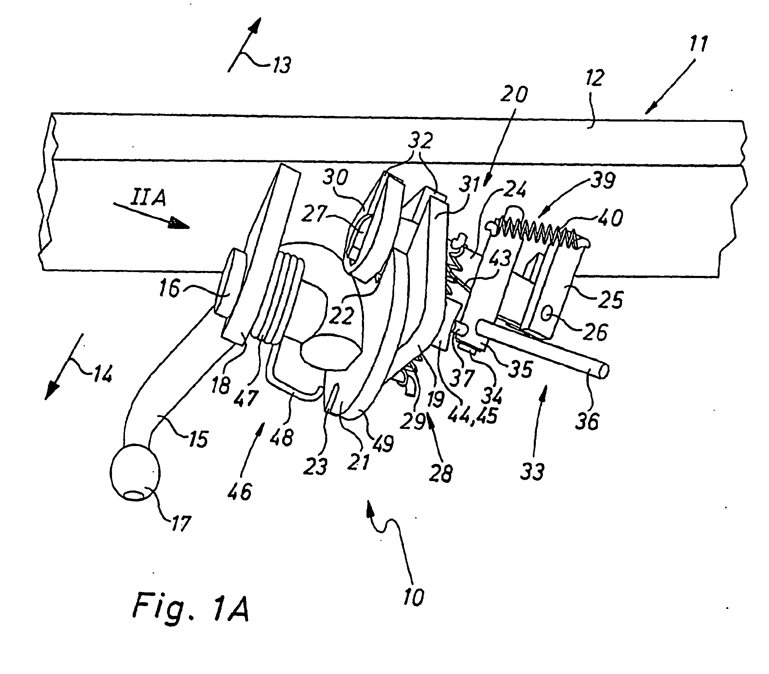

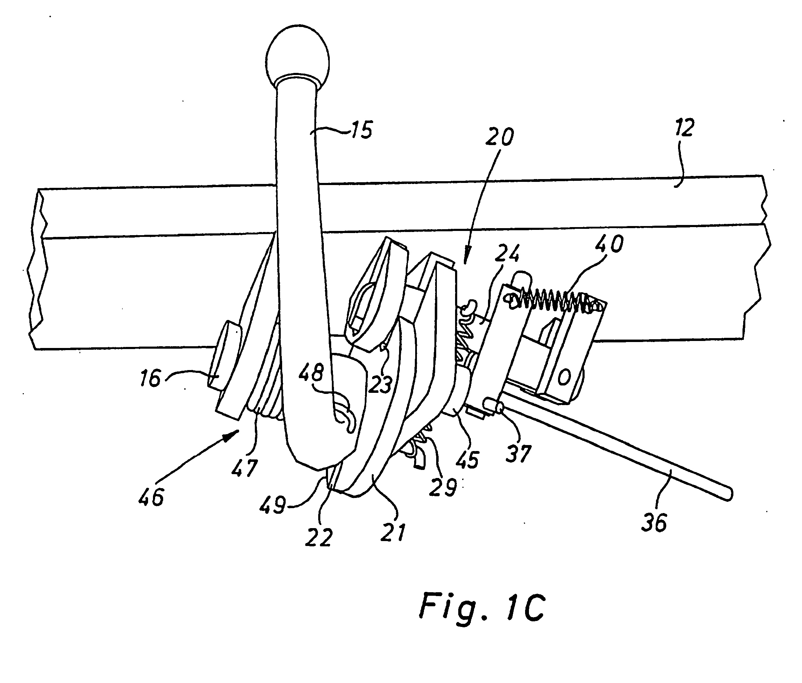

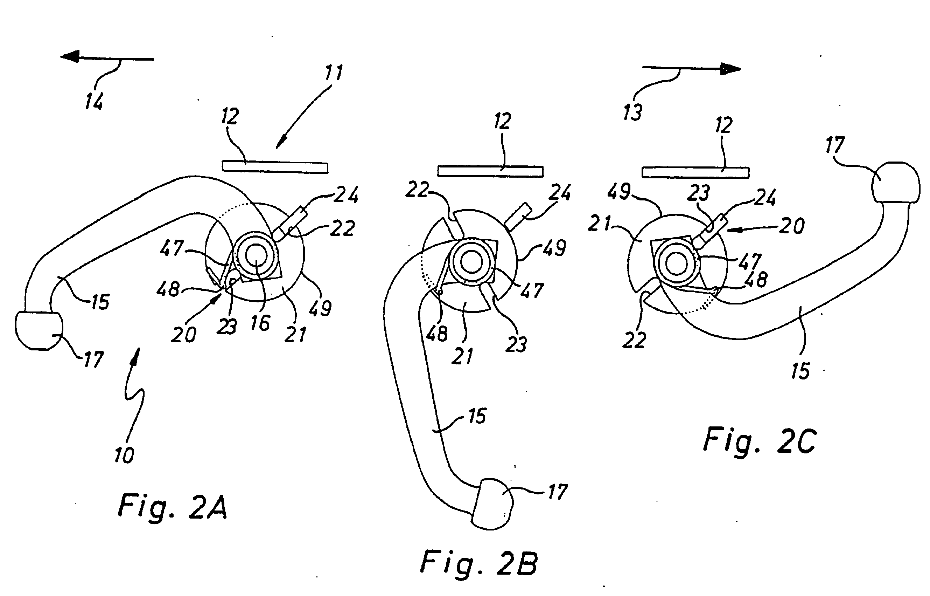

Beim Ausführungsbeispiel ist eine manuell bedienbare Anhängerkupplung 10 an einem Querholm 12 eines Fahrzeugs 11, beispielsweise eines Personenkraftwagens, angeordnet. Pfeile 13, 14 zeigen nach hinten zum Heck bzw. nach vorn zur Front des Fahrzeugs 11. An einem Kopfstück 17 eines Kupplungsarms 15 der Anhängerkupplung 10 kann ein Anhänger lösbar befestigt werden, wenn sich der Kupplungsarm 15 in der in den Figuren 1C, 2C gezeigten Arbeitsstellung befindet, bei der das Kopfstück 17 nach oben gerichtet ist. Aus der Arbeitsstellung kann der Kupplungsarm 15 in eine Ruhestellung (siehe Figuren 1A, 2A) unter Ausführung einer Tauchbewegung um die nicht dargestellte Heckschürze oder dergleichen des Fahrzeugs herum geschwenkt werden, bei der das Kopfstück 17 eine nach unten gerichtete Teil-Kreisbahn beschreibt.

Der Kupplungsarm 15 ist an einer Schwenkachse 16 angeordnet. Die Schwenkachse 16 ist an Lagerhalterungen 18, 19 drehbar gelagert, die am Querholm 12 angeordnet sind. Die Schwenkachse 16 verläuft schräg zum Querholm 12, also in einem von 90° abweichenden Winkel quer zur Fahrzeuglängsachse, so dass der Kupplungsarm 15 im eingeschwenkten Zustand, in der Ruhestellung, möglichst flach am Fahrzeugboden oder in einer Ausnehmung im unteren Bereich des Fahrzeugs 11 liegt. Der Kupplungsarm 15 ist in der Ruhestellung platzsparend verstaut, allerdings manuell nur schwer zu ergreifen.

An Stelle einer separaten Feststellvorrichtung zum Feststellen des Kupplungsarms 15 in Ruhestellung und einer separaten Haltevorrichtung zum Halten des Kupplungsarms 15 in Arbeitsstellung ist beim Ausführungsbeispiel eine beide Vorrichtungen umfassende Verriegelungsvorrichtung 20 vorgesehen.

Die Verriegelungsvorrichtung 20 enthält eine Riegelscheibe 21, die mit dem Kupplungsarm 15 schwenkfest verbunden und koaxial zur Schwenkachse 16 angeordnet ist. Die Schwenkachse 16 durchdringt die Riegelscheibe 21 vorliegend etwa in ihrer Mitte. An der Riegelscheibe 21 sind im Winkelabstand zueinander eine der Ruhestellung zugeordnete Ruhestellungs-Ausnehmung 22 sowie eine der Arbeitsstellung zugeordnete Arbeitsstellungs-Ausnehmung 23 angeordnet. Vorliegend beschreibt der Kupplungsarm 15 beim Bewegen zwischen Arbeits- und Ruhestellung etwa eine 180°-Drehung. Dem Drehwinkel des Kupplungsarms 11 zwischen Ruhestellung und Arbeitsstellung entsprechend sind die Ausnehmungen 22, 23 im Winkelabstand von etwa 180° zueinander an der Riegelscheibe 21 angeordnet. Die Ausnehmungen 22, 23 erstrecken sich vom Außenumfang der vorliegend im Wesentlichen kreisförmigen Riegelscheibe 21 her zu deren Mitte hin. Andere Anordnungen der Ausnehmungen sind ohne weiteres denkbar, beispielsweise könnten sie an der Stirnseite einer Riegelscheibe angeordnet sein.

In die Ausnehmungen 22, 23 greift ein Riegel 24 in der betreffenden Ruhe- bzw. Arbeitsstellung ein. Der Riegel 24 erstreckt sich in seiner Längsrichtung im Wesentlichen parallel zur Schwenkachse 16. Der Riegel 24 ist an Lagerhalterungen 25 schwenkbeweglich gelagert, die am Querholm 12 fahrzeugfest angeordnet sind. Eine Riegelschwenkachse 26 ist an den Lagerhalterungen 25 gelagert und verläuft quer zur Schwenkachse 16 des Kupplungsarms 15. Ein Ende des Riegels 24 ist zwischen den Lagerhalterungen 25 angeordnet und wird von der Riegelschwenkachse 26 durchdrungen. Am anderen, freien Ende des Riegels 24 befindet sich ein Verriegelungsabschnitt 27, der in die Ausnehmungen 22, 23 ein- bzw. aus diesen ausschwenkbar ist.

Der Riegel 24 wird durch eine Sicherungsvorrichtung 28 in den Ausnehmungen 22, 23 in der Ruhe- bzw. Arbeitsstellung gesichert. Die Sicherungsvorrichtung 28 wird durch eine Feder 29 gebildet, die einerseits am Riegel 24 und andererseits fahrzeugfest, vorliegend an der Lagerhalterung 19 befestigt ist.

Beim Ausschwenken des Riegels 24 aus den Ausnehmungen 22, 23 wird die Feder 29 gespannt, so dass der Riegel 24 selbsttätig wieder in die Ausnehmung 22 oder 23 einrasten kann und anschließend dort gehalten wird.

Zumindest im in die Ausnehmung 22 oder 23 eingerasteten Zustand wird der Riegel 24 in Drehrichtung der Riegelscheibe 21 durch Stützvorrichtungen 30, 31 abgestützt. Die Stützvorrichtungen 30, 31 nehmen von der Riegelscheibe 21 bzw. vom Kupplungsarm 15 auf den Riegel 24 ausgeübte Kräfte auf. Die Stützvorrichtungen 30, 31 sind fahrzeugfest am Querholm 12 angeordnet und weisen Ausnehmungen 32 auf, in die der Verriegelungsabschnitt 27 des Riegels 24 zumindest im in die Ausnehmungen 22, 23 eingeschwenkten Zustand eingreift. Als Stützvorrichtung 30 ist vorliegend ein separates, am Querholm 12 angeordnetes Stützelement vorgesehen. Als Stützvorrichtung 31 dient die Lagerhalterung 19. Die Riegelscheibe 21 ist zumindest in den Bereichen ihrer Ausnehmungen 22, 23 zwischen den Stützvorrichtungen 30, 31 angeordnet. In der Ruhestellung fluchtet die Ruhestellungs-Ausnehmung 22 mit den Ausnehmungen 32, in der Arbeitsstellung die Arbeitsstellungs-Ausnehmung 23, so dass der Riegel in die betreffenden Ausnehmungen gleichzeitig eingreifen kann.

Es versteht sich, dass auch andere Arten von Verriegelungsvorrichtungen denkbar sind. Beispielsweise könnte ein Verriegelungsstift, der parallel zur Schwenkachse 16 verläuft, in die Ausnehmungen 22, 23 oder in an der Verriegelungsscheibe 21 stirnseitig angeordnete Ausnehmungen eingreifen. Ferner könnte eine Verriegelungsvorrichtung vorgesehen sein, die unmittelbar am Kupplungsarm angreift, so dass keine Riegelscheibe erforderlich wäre.

Prinzipiell könnte zwar die Verriegelungsvorrichtung 20 unmittelbar durch einen Benutzer betätigt werden, beispielsweise indem man eine entsprechende Entriegelungskraft auf den Riegel 24 ausübt. Vorliegend jedoch ist hierfür eine Betätigungseinrichtung 33 vorgesehen, deren Funktion insbesondere anhand der Figurensequenzen 3A-3C und 4A-4C ersichtlich ist. In diesem Zusammenhang sei bemerkt, dass zwischen den Figuren teilweise geringfügige geometrische Abweichungen bestehen, insbesondere Maße und Winkel unterschiedlich dargestellt sind, und dass manche Teile nicht oder nur teilweise dargestellt sind, was insgesamt jedoch auf die prinzipielle Funktionsweise der Betätigungseinrichtung 33 keine Auswirkung hat.

Die Betätigungseinrichtung 33 wirkt auf den Riegel 24. Sie enthält ein an einer Schwenkachse 34 schwenkbeweglich gelagertes Schwenkelement 35. Die Schwenkachse 34 ist fahrzeugfest am Querholm 12 angeordnet. Sie steht von diesem ab. Die Schwenkachse 34 verläuft quer zur Riegelschwenkachse 26. Das Schwenkelement 35 ist hülsen- oder rohrartig ausgestaltet und auf der Schwenkachse 34 drehbeweglich angeordnet. Vom Schwenkelement 35 stehen radial ein Bedienhebel 36, ein Anschlagstück 37 sowie eine Rollenachse 38 ab, im Ausführungsbeispiel jeweils mit Winkelabstand zueinander.

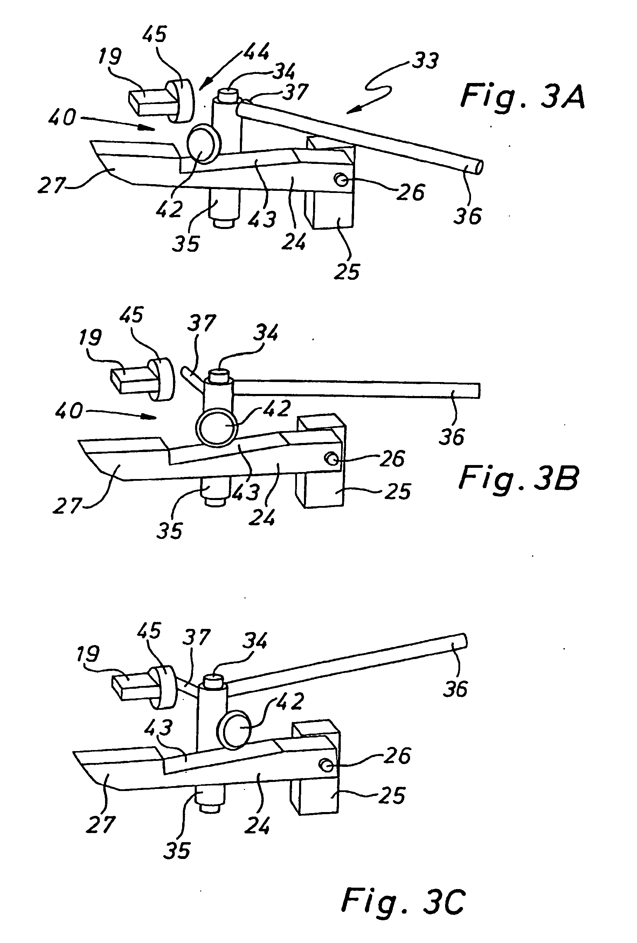

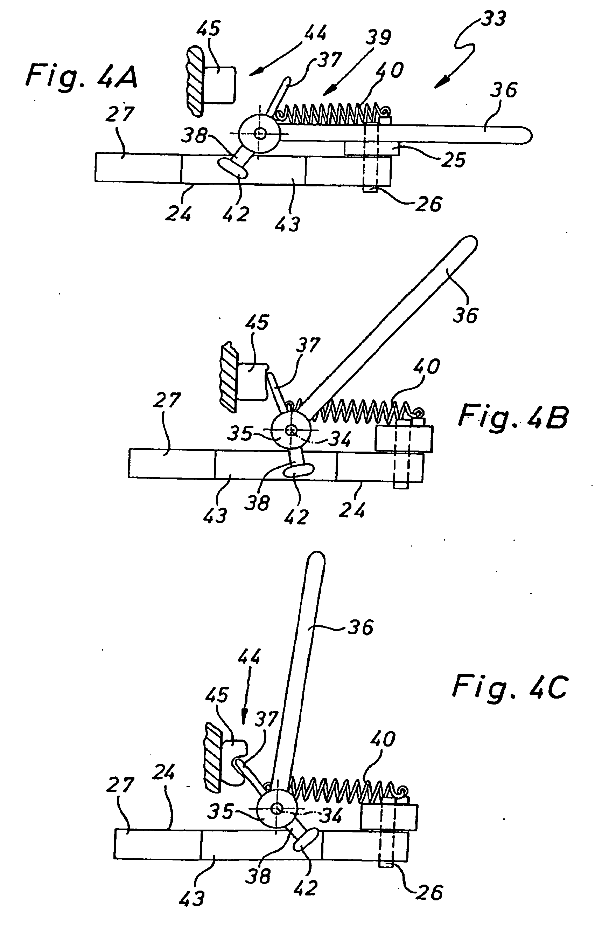

Eine Rückstellvorrichtung 39 stellt die Betätigungseinrichtung 33 nach Betätigen durch einen Benutzer in eine in den Figuren 3A, 4A gezeigte Grundstellung zurück. Die Rückstellvorrichtung 39 enthält vorliegend eine Feder 40, die einerseits am Schwenkelement 35 und andererseits fahrzeugfest, beispielsweise an einer Lagerhalterung 25, angeordnet ist. Die Feder 40 wird beim Entriegeln der Verriegelungsvorrichtung 20 gespannt (Figur 3C, 4C) und stellt die Betätigungseinrichtung 33 anschließend wieder in ihre Grundstellung zurück.

Durch Schwenken des Bedienhebels 36 kann die Verriegelungsvorrichtung 20 entriegelt werden. Ein hinter dem Fahrzeug 11 stehender Benutzer zieht hierbei den Bedienhebel 36 sozusagen zu sich her, wobei ein Umlenkgetriebe 41 die Betätigungs-Schwenkbewegung des Schwenkelements 35 in eine Schwenkbewegung des Riegels 24 umlenkt. Das Umlenkgetriebe 41, vorliegend ein Rollengetriebe, enthält eine an der Rollenachse 38 drehbar gelagerte Rolle 42, die auf einer im mittleren Bereich des Riegels 24 verlaufenden Rollbahn 43 abrollt. Vorliegend verläuft die Rollbahn 43 schräg am Riegel 24, so dass mit fortschreitender Schwenkbewegung des Bedienhebels 36 in Entriegelungsrichtung der Riegel 24 immer weiter aus den Ausnehmungen 22 oder 23 herausbewegt wird. Es versteht sich, dass abweichend vom Ausführungsbeispiel auch die Schwenkachse 34 mit Bezug auf die Riegelschwenkachse 26 schräg gestellt sein kann, so dass die Rollbahn 43 nicht unbedingt schräg verlaufen muss. Ferner sind auch andere Formen von Umlenkgetrieben denkbar, beispielsweise mit Zahnrad-Getriebe oder Hebelgetriebe.

In diesem Zusammenhang sei auch festgehalten, dass das Umlenkgetriebe nicht zwingend notwendig ist. Ein Bedienhebel könnte auch unmittelbar auf den Riegel 24 wirken, wobei er dann möglicherweise nicht mehr derartig ergonomisch zu platzieren und zu bedienen ist wie beim Ausführungsbeispiel.

Beim Betätigen der Betätigungseinrichtung 33 zum Lösen der Verriegelungsvorrichtung 20 muss ein Benutzer eine Gegenkraft überwinden, die von einer Bremsvorrichtung 44 ausgeübt wird. Neben dem Anschlagstück 37 enthält die Bremsvorrichtung 44 ein fahrzeugfest, vorliegend an der Lagerhalterung 19 angeordnetes, elastisches Pufferelement 45, an welches das Anschlagstück 37 beim Entriegeln der Verriegelungsvorrichtung 20 anschlägt. Bei den in den Figuren 3B, 4B gezeigten Stellungen berührt das Anschlagstück 37 das Pufferelement 45 gerade noch nicht bzw. nur geringfügig, wobei sich der Riegel 24 aus einer der Ausnehmungen 22, 23 herauszubewegen beginnt. Erst wenn der Benutzer den Bedienhebel 36 weiterschwenkt, wobei das Anschlagstück 37 das Pufferelement 45 entsprechend vorspannt, wird der Riegel 24 vollständig aus einer der Ausnehmungen 22 oder 23 herausbewegt, so dass die Riegelscheibe 21 und mithin der Kupplungsarm 15 verschwenkt werden können. Der Benutzer muss also eine Art Druckpunkt oder Druckzone überwinden, um die Verriegelungsvorrichtung 20 zu entriegeln. Die Bremsvorrichtung erfüllt in dieser Hinsicht sozusagen eine Sicherheitsfunktion.

Eine andere Funktion der Bremsvorrichtung 44 wird erst im Zusammenhang mit später folgenden Erläuterungen verständlich: Zum Lösen der Verriegelungsvorrichtung 20 in Arbeitsstellung des Kupplungsarms 15 ist vorliegend ein geringerer Betätigungshub am Bedienhebel 36 erforderlich als zum Lösen in Ruhestellung des Kupplungsarms 15. Durch die Bremsvorrichtung 44 wird der Benutzer beim Lösen der Verriegelungsvorrichtung 20 aus der Arbeitsstellung sozusagen daran gehindert, den Bedienhebel 36 noch weiter zu betätigen, da bereits bei verhältnismäßig geringer Betätigung der gewünschte Erfolg eintritt, nämlich das Entriegeln des Kupplungsarms 15 aus der Arbeitsstellung.

In diesem Zusammenhang sei festgehalten, dass vorliegend bei der Betätigungseinrichtung 33 eine separate Rückstellvorrichtung 39 und eine separate Bremsvorrichtung 44 vorgesehen sind, denen jeweils unterschiedliche Funktionen zugeordnet sind. Es ist prinzipiell aber auch denkbar, dass beispielsweise eine Rückstellvorrichtung vorgesehen ist, die auch die Funktion einer Bremsvorrichtung ausübt oder umgekehrt. Beispielsweise könnte die Feder 40 eine entsprechend hohe Federkonstante aufweisen.

Die Funktionsweise der Anhängerkupplung 10 wird im Folgenden anhand eines Bedienablaufs näher erläutert:

Zum Entriegeln der Verriegelungsvorrichtung 20 in Ruhestellung des Kupplungsarms (Figuren 1A, 2A) wird der Bedienhebel 36 geschwenkt. Die Rolle 42 rollt auf der Rollbahn 43 in Richtung Riegel-Schwenkachse 26, so dass der Riegel 24 ausgelenkt und der Verriegelungsabschnitt 27 aus der Ruhestellungs-Ausnehmung 22 herausbewegt wird. Zusätzlich muss ab der in Figur 4B gezeigten Stellung eine von der Bremsvorrichtung 44 ausgeübte Gegenkraft überwunden werden.

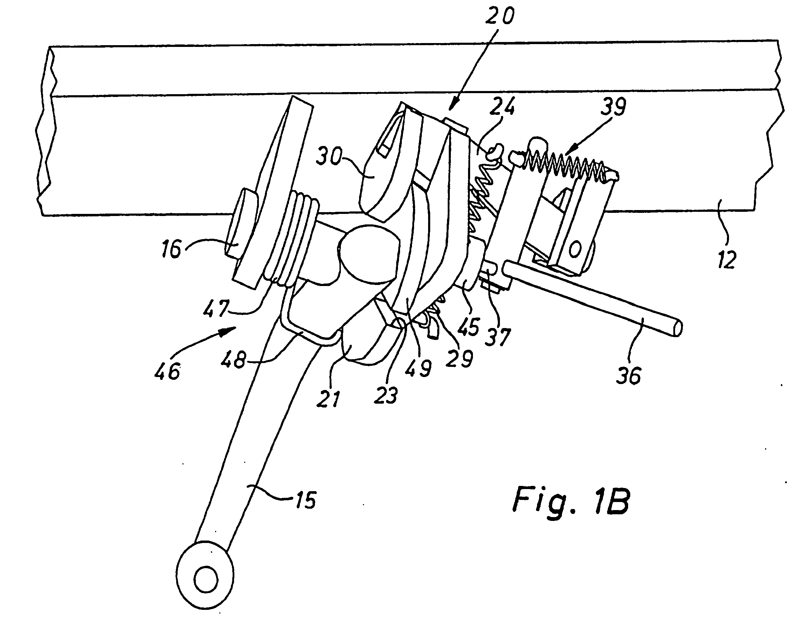

Wenn der Verriegelungsabschnitt 27 vollständig aus der Ruhestellungs-Ausnehmung 22 austritt, können sich die Riegelscheibe 21 und somit der Kupplungsarm 15 frei drehen. Der Kupplungsarm 15 fällt dann aufgrund seiner Gewichtskraft in eine untere Zwischenstellung (Figuren 1B, 2B), so dass er von einem Benutzer bequem ergreifbar und in die Arbeitsstellung bringbar ist (Figuren 1C, 2C).

Erst in der unteren Zwischenstellung kommt der Kupplungsarm 15 mit einer Rückstellvorrichtung 46 in Krafteingriff, wird von dieser mithin an einer Weiterbewegung zur Arbeitsstellung gehindert. Die Rückstellvorrichtung 46 enthält eine von der Schwenkachse 16 durchdrungene Schraubenfeder 47. Ein Ende der Feder 47 stützt sich fahrzeugfest, vorliegend an der Lagerhalterung 18 ab, während das andere Ende einen Anschlag 48 für den Kupplungsarm 15 bildet, mit dem der Kupplungsarm 15 auf dem Wegabschnitt zwischen der unteren Zwischenstellung und der Arbeitsstellung in kraftschlüssigem Kontakt steht. Der Anschlag 48 steht vor die Schwenkachse 16 vor und verläuft im Wesentlichen parallel zu dieser. Auf dem Wegabschnitt zwischen der Zwischenstellung und der Arbeitsstellung umfasst der Anschlag 48 den Kupplungsarm 15 bügelartig.

Durch Schwenken des Kupplungsarms 15 zwischen der unteren Zwischenstellung und der Arbeitsstellung wird die Rückstellvorrichtung gespannt. Allerdings verhindert nach Erreichen der Arbeitsstellung die in diesem Falle als Haltevorrichtung arbeitende Verriegelungsvorrichtung 20, dass die Rückstellvorrichtung 46 selbständig den Kupplungsarm 15 aus der Arbeitsstellung in Richtung Ruhestellung schwenken kann: Die Feder 29 bewegt den Riegel 24 in die Arbeitsstellungs-Ausnehmung 23, so dass die Anhängerkupplung 10 in Arbeitsstellung verriegelt ist.

In die Ruhestellung lässt sich die Anhängerkupplung 10 anschließend sehr einfach bringen:

Der Benutzer zieht gegen den Widerstand der Bremsvorrichtung 44 am Bedienhebel 36. Hierzu ist ein im Vergleich zum Lösen der Verriegelungsvorrichtung 20 aus der Ruhestellung vergleichsweise geringer Betätigungshub erforderlich, weil die Eintrittslänge des Riegels 24 in die Arbeitsstellungs-Ausnehmung 23 kleiner ist als die Eintrittslänge in die Ruhestellungs-Ausnehmung 22. Nach dem Herausbewegen des Riegels 24 aus der Arbeitsstellungs-Ausnehmung 23 stellt die Rückstellvorrichtung 46 den Kupplungsarm 15 in die Ruhestellung zurück. Dabei gleitet der Riegel 24 mit seinem vorderen Verriegelungsabschnitt 27 auf einer an der Riegelscheibe 21 zwischen den Ausnehmungen 22 und 23 angeordneten Gleitbahn 49 und rastet letztlich in die Ruhestellungs-Ausnehmung 22 ein. Die Anhängerkupplung 10 ist dann in Ruhestellung verriegelt.

Die Gleitbahn 49 ist vorliegend am Außenumfang der Riegelscheibe 21 angeordnet. Sie fällt mit Bezug auf die Drehachse der Riegelscheibe 21, vorliegend die Schwenkachse 16, zur Arbeitsstellungs-Ausnehmung 23 hin ab (siehe Figuren 2A bis 2C). Die Gleitbahn 49 hat vorliegend mit Bezug zur Drehachse der Riegelscheibe 21 einen exzentrischen Verlauf, wobei allerdings auch andere Verläufe möglich sind . Der Riegel 24 wird beim Drehen der Riegelscheibe 21 zwischen Arbeits- und Ruhestellung in Entriegelungsrichtung betätigt, vorliegend von der Schwenkachse 16 wegbewegt. Hierbei hebt der Riegel 24 von der Betätigungseinrichtung 33 ab. Der Benutzer der Anhängerkupplung 10 spürt somit keine oder nahezu keine Rückwirkung des Riegels 24 auf den Bedienhebel 36 und zum anderen funktioniert das Verriegeln des Kupplungsarms 15 in Ruhestellung auch dann zuverlässig, wenn der Benutzer etwa den Bedienhebel 36 festhält und nicht in Betätigungs-Grundstellung (Figur 3A, 4A) zurückstellt.

Ferner sind auch weitere Ausgestaltungen denkbar:

Beim Ausführungsbeispiel reicht die in die Rückstellvorrichtung 46 eingebrachte Energie beim Bewegen des Kupplungsarms 15 in die Arbeitsstellung aus, um diesen nach Lösen der Verriegelungsvorrichtung 20 wieder in die Ruhestellung zurückzubewegen. Es ist aber auch denkbar, dass ein Benutzer zusätzlich Energie aufbringen muss, dem Kupplungsarm beispielsweise einen Stoß geben muss.

Als Feststellvorrichtung und/oder als Haltevorrichtung kann beispielsweise auch eine Federanordnung oder Klammer dienen.

## Patentansprüche

1. Anhängerkupplung für Kraftfahrzeuge, insbesondere Personenkraftwagen, mit einem Kupplungsarm (15), der an seinem freien Ende ein Kopfstück (17) zum lösbaren Befestigen eines Anhängers trägt und zwischen einer im am Fahrzeug (11) montierten Zustand nach hinten gerichteten Arbeitsstellung und einer weiter vorne unter dem Fahrzeug (11) angeordneten Ruhestellung unter Ausführung einer Tauchbewegung verstellbar ist, und mit einer Feststellvorrichtung zum Feststellen des Kupplungsarms (15) in Ruhestellung, wobei der Kupplungsarm (15) in der Ruhestellung durch eine Kraft beaufschlagt ist, so dass er nach dem Lösen der Feststellvorrichtung selbsttätig aus der Ruhestellung zur Arbeitsstellung hin in eine untere Zwischenstellung schwenkt, so dass er von einem Benutzer bequem ergreifbar und in die Arbeitsstellung bringbar ist, wobei als die den Kupplungsarm (15) in Ruhestellung beaufschlagende Kraft dessen Gewichtskraft und/oder eine von einer Bereitstellungs-Federanordnung bereitgestellte Bereitstellungskraft vorgesehen ist, wobei der Kupplungsarm (15) durch eine Haltevorrichtung in der Arbeitsstellung gehalten wird, wobei eine Rückstellvorrichtung (46), insbesondere eine Rückstellfederanordnung (47), vorgesehen ist, die den Kupplungsarm (15) nach Lösen der Haltevorrichtung aus der Arbeitsstellung in die Ruhestellung zurückstellt und die durch den Kupplungsarm (15) auf dem Weg von der Ruhestellung in die Arbeitsstellung vorgespannt wird, und wobei der Kupplungsarm (15) mit der Rückstellvorrichtung (46) nur auf dem Wegabschnitt in Krafteingriff steht, der sich zwischen der Arbeitsstellung und etwa dem Bereich der Zwischenstellung erstreckt.

2. Anhängekupplung nach Anspruch 1, **dadurch gekennzeichnet, dass** die Rückstellvorrichtung (46) ausschließlich oder zumindest im Wesentlichen auf dem Wegabschnitt von der Zwischenstellung in die Arbeitsstellung vorgespannt wird.

3. Anhängerkupplung nach Anspruch 1 oder 2, **dadurch gekennzeichnet, dass** die Rückstellvorrichtung (46) derart dimensioniert ist, dass die durch Bewegen des Kupplungsarms (15) in die Arbeitsstellung in die Rückstellvorrichtung (46) eingebrachte Energie für das Zurückbewegen des Kupplungsarms (15) in die Ruhestellung nach Lösen der Haltevorrichtung ausreicht.

4. Anhängerkupplung nach einem der vorhergehenden Ansprüche, **dadurch gekennzeichnet, dass** die Haltevorrichtung und die Feststellvorrichtung von einer Verriegelungsvorrichtung (24, 20) gebildet werden.

5. Anhängerkupplung nach Anspruch 4, **dadurch gekennzeichnet, dass** die Verriegelungsvorrichtung (20) eine mit dem Kupplungsarm (15) schwenkfest verbundene Riegelscheibe - (21) enthält, an der eine der Ruhestellung zugeordnete Ruhestellungs-Ausnehmung (22) und eine der Arbeitsstellung zugeordnete Arbeitsstellungs-Ausnehmung (23) mit Winkelabstand zueinander angeordnet sind, denen ein fahrzeugfest anzuordnender, in jeder Stellung selbsttätig in die betreffende Ausnehmung (22, 23) einrastender Riegel (24) zugeordnet ist.

6. Anhängerkupplung nach Anspruch 4 oder 5, **dadurch gekennzeichnet, dass** an der Riegelscheibe (21) zwischen der Arbeitsstellungs-Ausnehmung (23) und der Ruhestellungs-Ausnehmung (22) eine Gleitbahn (49) vorgesehen ist, auf der der Riegel (24) beim Drehen der Riegelscheibe (21) zwischen Arbeitsstellung und Ruhestellung federbelastet anliegt.

7. Anhängerkupplung nach Anspruch 6, **dadurch gekennzeichnet, dass** die Eintrittslänge des Riegels (24) in die Arbeitsstellungs-Ausnehmung (23) kleiner ist als die Eintrittslänge des Riegels (24) in die Ruhestellungs-Ausnehmung (22), so dass der Riegel (24) nach dem Lösen aus der Arbeitsstellungs-Ausnehmung (23) beim Drehen der Riegelscheibe (21) von der Gleitbahn (49) betätigbar ist und dabei derjenige Anteil des zum Lösen des Riegels (24) aus der Ruhestellungs-Ausnehmung (22) erforderlichen Betätigungshubs erbringbar ist, um den dieser Betätigungshub größer ist als der Betätigungshub zum Lösen des Riegels (24) aus der Arbeitsstellungs-Ausnehmung (23).

8. Anhängerkupplung nach einem der vorhergehenden Ansprüche, **dadurch gekennzeichnet, dass** die Feststellvorrichtung und/oder die Haltevorrichtung durch eine vom Innenraum des Fahrzeugs (11) aus und/oder im Bereich der hinteren Fahrzeugkontur bedienbare Betätigungseinrichtung (33) lösbar ist.

9. Anhängerkupplung nach Anspruch 8, **dadurch gekennzeichnet, dass** die Betätigungseinrichtung (33) einen im montierten Zustand der Anhängerkupplung im Bereich der hinteren Fahrzeugkontur, insbesondere unterhalb eines Fahrzeug-Stoßfängers, oder im Gepäckraum des Fahrzeuges (11) angeordneten Bedienhebel (36) aufweist.

10. Anhängerkupplung nach Anspruch 8 oder 9, **dadurch gekennzeichnet, dass** die Betätigungseinrichtung (33) dem Riegel (24) zugeordnet ist.

11. Anhängerkupplung nach Anspruch 10, **dadurch gekennzeichnet, dass** der Riegel (24) von der Betätigungseinrichtung (33) abhebbar ist.

12. Anhängerkupplung nach Anspruch 10 oder 11, **dadurch gekennzeichnet, dass** die Betätigungseinrichtung (33) ein auf den Riegel (24) wirkendes Umlenkgetriebe (41), insbesondere ein Rollengetriebe (38, 42, 43), aufweist.

13. Anhängerkupplung nach einem der Ansprüche 8 bis 12, **dadurch gekennzeichnet, dass** der Betätigungseinrichtung (33) eine elastische Bremsvorrichtung (44) zugeordnet ist, die durch die Betätigungseinrichtung (33) beim Lösen der Feststellvorrichtung vorgespannt wird, so dass das Betätigen der Betätigungseinrichtung (33) beim Lösen der Verriegelungsvorrichtung (20) gegen eine von der Bremsvorrichtung ausgeübte Gegenkraft erfolgt.

14. Fahrzeug, insbesondere Personenkraftwagen, mit einer Anhängerkupplung (10) nach einem der vorhergehenden Ansprüche.

## Claims

1. Trailer coupling for motor vehicles, in particular cars, with a coupling arm (15) which carries at its free end a head section (17) for the releasable fastening of a trailer and which is adjustable, executing a dipping movement, between an operating position directed towards the rear when fitted to the vehicle (11), and a rest position located further forwards beneath the vehicle (11), and with an arresting device to fix the coupling arm (15) in the rest position, wherein a force acts upon the coupling arm (15) in the rest position so that, after the arresting device has been released, it swivels automatically from the rest position towards the operating position in a lower intermediate position, so that it may be grasped easily by the user and brought into the operating position, wherein the force provided to act on the coupling arm (15) in the rest position is the force of its own weight and/or a deployment force provided by a deployment spring assembly, wherein the coupling arm (15) is held in the operating position by a holding fixture, wherein a resetting device (46), in particular a resetting spring assembly (47) is provided which returns the coupling arm (15), after release of the holding fixture, from the operating position into the rest position, and which is biased by the coupling arm (15) on the way from the rest position to the operating position, and wherein the coupling arm (15) is in force engagement with the resetting device (46) only on the section of length between the operating position and roughly the area of the intermediate position.

2. Trailer coupling according to claim 1, **characterised in that** the resetting device (46) is biased solely or at least substantially on the section of length from the intermediate position into the operating position.

3. Trailer coupling according to claim 1 or 2, **characterised in that** the resetting device (46) is so dimensioned that the energy supplied to the resetting device (46) by movement of the coupling arm (15) into the operating position is sufficient for the return movement of the coupling arm (15) into the rest position after release of the holding fixture.

4. Trailer coupling according to any of the preceding claims, **characterised in that** the holding fixture and the arresting device are formed by a locking device (24, 20).

5. Trailer coupling according to claim 4, **characterised in that** the locking device (20) contains a locking disc (21) connected non-pivotably to the coupling arm (15) and on which a rest position recess (22) assigned to the rest position and an operating position recess (23) assigned to the operating position are arranged with angular clearance from one another, and to which is assigned a bolt (24), to be fixed immovably to the vehicle and engaging in each position automatically in the relevant recess (22, 23).

6. Trailer coupling according to claim 4 or 5, **characterised in that** there is provided on the locking disc (21) between the operating position recess (23) and the rest position recess (22) a slide track (49) on which the bolt (24) is in contact with spring loading during turning of the locking disc (21) between operating position and rest position.

7. Trailer coupling according to claim 6, **characterised in that** the entry length of the bolt (24) in the operating position recess (23) is less than the entry length of the bolt (24) in the rest position recess (22), so that the bolt (24) after release from the operating position recess (23) on rotation of the locking disc (21) may be actuated by the slide track (49) and in so doing that portion of the actuating stroke required to release the bolt (24) from the rest position recess (22) may be provided, by which this actuating stroke is greater than the actuating stroke to release the bolt (24) from the operating position recess (23).

8. Trailer coupling according to any of the preceding claims, **characterised in that** the arresting device and/or the holding fixture is/are releasable by an actuating device (33) operable from inside the vehicle (11) and/or in the area of the rear vehicle contour.

9. Trailer coupling according to claim 8, **characterised in that** the actuating device (33) has a control lever (36) located in the installed state of the trailer coupling in the area of the rear vehicle contour, in particular underneath a vehicle bumper, or in the luggage compartment of the vehicle (11).

10. Trailer coupling according to claim 8 or 9, **characterised in that** the actuating device (33) is assigned to the bolt (24).

11. Trailer coupling according to claim 10, **characterised in that** the bolt (24) may be lifted from the actuating device (33).

12. Trailer coupling according to claim 10 or 11, **characterised in that** the actuating device (33) has a corner gear (41) acting on the bolt (24), in particular a roller gearing (38, 42, 43).

13. Trailer coupling according to any of claims 8 to 12, **characterised in that** the actuating device (33) is assigned an elastic braking device (44), which is biased by the actuating device (33) during release of the arresting device, so that actuation of the actuating device (33) on release of the locking device (20) is effected against a counteracting force exerted by the braking device.

14. Vehicle, in particular a car, with a trailer coupling (10) according to any of the preceding claims.

## Revendications

1. Attelage de remorque pour véhicules automobiles, en particulier pour voiture particulière, comprenant un bras d'attelage (15), qui supporte au niveau de son extrémité libre une pièce de tête (17) servant à fixer de manière amovible une remorque et qui peut être déplacé entre une position de travail orientée vers l'arrière lorsqu'il est monté sur le véhicule (11), et une position de repos disposée davantage à l'avant sous le véhicule (11) en exécutant un mouvement plongeant, et comprenant un dispositif de blocage servant à bloquer le bras d'attelage (15) dans la position de repos, sachant que le bras d'attelage (15) est soumis à l'action d'une force dans la position de repos de sorte qu'il pivote, après la libération du dispositif de blocage, automatiquement dans une position inférieure intermédiaire depuis la position de repos en direction de la position de travail, si bien qu'il peut être saisi de manière confortable par un utilisateur et qu'il peut être amené dans la position de travail, sachant que sont prévues, en tant que force exerçant une action sur le bras de couplage (15) dans la position de repos, la force du poids de ce dernier et/ou une force mise à disposition par un ensemble de ressorts de mise à disposition, sachant que le bras d'attelage (15) est maintenu par un dispositif de retenue dans la position de travail, sachant qu'un dispositif de rappel (46), en particulier un ensemble de ressorts de rappel (47), est prévu, lequel ramène le bras d'attelage (15), après la libération du dispositif de retenue, depuis la position de travail dans la position de repos et qui est précontraint par le bras d'attelage (15) sur le trajet entre la position de travail et la position de travail, et sachant que le bras d'attelage (15) est en prise sous l'effet d'une force avec le dispositif de rappel (46) uniquement sur le tronçon de trajet s'étendant entre la position de travail et approximativement la zone de la position intermédiaire.

2. Attelage de remorque selon la revendication 1, **caractérisé en ce que** le dispositif de rappel (46) est précontraint exclusivement ou au moins essentiellement sur le tronçon du trajet entre la position intermédiaire et la position de travail.

3. Attelage de remorque selon la revendication 1 ou 2, **caractérisé en ce que** le dispositif de rappel (46) présente des dimensions telles que l'énergie introduite dans le dispositif de rappel (46) par le déplacement du bras d'attelage (15) dans la position de travail suffit à ramener le bras d'attelage (15) dans la position de repos après la libération du dispositif de retenue.

4. Attelage de remorque selon l'une quelconque des revendications précédentes, **caractérisé en ce que** le dispositif de retenue et le dispositif de blocage sont formés par un dispositif de verrouillage (24, 20).

5. Attelage de remorque selon la revendication 4, **caractérisé en ce que** le dispositif de verrouillage (20) contient un disque de clenche (21) relié de manière solidaire en pivotement au bras d'attelage (15), au niveau duquel sont disposés, l'un par rapport à l'autre, selon un angle d'écartement, un évidement de position de repos (22) associé à la position de repos et un évidement de position de travail (23) associé à la position de travail, auxquels est associée une clenche (24) devant être disposée de manière solidaire au véhicule, s'enclenchant dans l'évidement concerné (22, 23) de manière automatique dans chaque position.

6. Attelage de remorque selon la revendication 4 ou 5, **caractérisé en ce qu'**est prévue au niveau du disque de clenche (21) entre l'évidement de position de travail (23) et l'évidement de position de repos (22), une glissière (49), sur laquelle repose la clenche (24), soumise à l'action d'un ressort, lors de la rotation du disque de clenche (21) entre la position de travail et la position de repos.

7. Attelage de remorque selon la revendication 6, **caractérisé en ce que** la longueur d'entrée de la clenche (24) est plus petite dans l'évidement de position de travail (23) que la longueur d'entrée de la clenche (24) dans l'évidement de position de repos (22) de sorte que la clenche (24) peut être actionnée par la glissière (49) après la libération en dehors de l'évidement de position de travail (23) lors de la rotation du disque de clenche (21), ce qui permet ce faisant d'obtenir la portion de la course d'actionnement nécessaire pour libérer la clenche (24) en dehors de l'évidement de position de repos (22), portion de laquelle ladite course d'actionnement est plus grande que la course d'actionnement servant à libérer la clenche (24) en dehors de l'évidement de position de travail (23).

8. Attelage de remorque selon l'une quelconque des revendications précédentes, **caractérisé en ce que** le dispositif de blocage et/ou le dispositif de retenue peuvent être libérés par un système d'actionnement (33) pouvant être utilisé depuis l'habitacle du véhicule (11) et/ou dans la zone du contour arrière du véhicule.

9. Attelage de remorque selon la revendication 8, **caractérisé en ce que** le système d'actionnement (33) présente un levier de commande (36) disposé, lorsque l'attelage de remorque est monté, dans la zone du contour arrière du véhicule, en particulier sous le pare-chocs du véhicule, ou dans le coffre à bagages du véhicule (11).

10. Attelage de remorque selon la revendication 8 ou 9, **caractérisé en ce que** le système d'actionnement (33) est associé à la clenche (24).

11. Attelage de remorque selon la revendication 10, **caractérisé en ce que** la clenche (24) peut être dégagée par le système d'actionnement (33).

12. Attelage de remorque selon la revendication 10 ou 11, **caractérisé en ce que** le système d'actionnement (33) présente un mécanisme de renvoi (41) agissant sur la clenche (24), en particulier un mécanisme à galets (38, 42, 43).

13. Attelage de remorque selon l'une quelconque des revendications 8 à 12, **caractérisé en ce qu'**est associé au système d'actionnement (33), un dispositif de freinage (44) élastique, qui est précontraint par le système d'actionnement (33) lors de la libération du dispositif de blocage de sorte que l'actionnement du système d'actionnement (33) est effectué lors de la libération du dispositif de verrouillage (20) à l'encontre d'une force antagoniste exercée par le dispositif de freinage.

14. Véhicule, en particulier voiture particulière, équipé d'un attelage de remorque (10) selon l'une quelconque des revendications précédentes.
